# EUROPÄISCHE PATENTSCHRIFT

(11) **EP 2 810 006 B1**
(45) Veröffentlichungstag und Bekanntmachung des Hinweises auf die Patenterteilung: **22.01.2020**
(21) Anmeldenummer: 12808356.5
(22) Anmeldetag: 17.12.2012
(51) Int. Cl.: F27D 1/00

(54) **HITZESCHILD MIT ÄUSSERER FASERWICKLUNG**
HEAT SHIELD WITH OUTER FIBRE WINDING
BOUCLIER THERMIQUE À STRUCTURE DE FIBRES EXTERNE ENROULÉE

(30) Priorität: 03.02.2012 DE 102012201650
(43) Veröffentlichungstag der Anmeldung: 10.12.2014
(73) Patentinhaber: SGL Carbon SE, 65201 Wiesbaden (DE)
(72) Erfinder: FROMMELT, Sebastian, Meitingen 86405 (DE); SCHRÖDER, Markus, Meitingen 86405 (DE); PFALLER, Peter, Meitingen 86405 (DE); HINGST, Karl, Meitingen 86405 (DE); REINTHALER, Martin, Meitingen 86405 (DE)
(86) Internationale Anmeldenummer: PCT/EP2012/075729
(87) Internationale Veröffentlichungsnummer: WO 2013/113445

(56) Entgegenhaltungen:
- EP-A1- 0 248 918
- EP-A2- 2 135 976
- WO-A2-01/42338
- DE-A1-102010 020 193
- JP-A- 6 109 373
- JP-A- 10 101 471
- JP-A- 2001 089 238
- US-A- 4 168 013
- US-A1- 2007 259 185

## Beschreibung

Die vorliegende Erfindung betrifft ein hohlzylinderförmiges Hitzeschild, welches für Hochtemperaturanwendungen geeignet ist, bei denen das Hitzeschild Temperaturen von bis zu 2.800°C ausgesetzt ist.

Als Hitzeschilder für Hochtemperaturanwendungen, beispielsweise als Hitzeschilder in Hochtemperaturöfen oder Gaskonvertern, werden aufgrund ihrer hohen Hitzestabilität und ihrer chemischen Inertheit gegenüber der in dem Ofeninneren vorliegenden Substanzen häufig Werkstoffe auf Basis von Kohlenstoff eingesetzt. Derartige Hitzeschilder sind üblicherweise hohlzylinderförmig ausgestaltet und sind an der Außenseite der thermischen Isolierung angeordnet, mit welcher der Ofen ausgekleidet ist. Hitzeschilder umfassend Graphitfolien mit Karbonfasern sind z.B. aus EP-A 1 852 252, DE-A10 2010 020 193, EP-A 0 248 918, WO-A 01 42 338, JP-A 2001 089 238 oder US-A 4 168 013 bekannt.

Solche Hitzeschilder werden beispielsweise eingesetzt, damit in einem Hochtemperaturofen bei einem Versagen bzw. Durchschlagen der thermischen Isolierung die Ofenhitze nicht konzentriert am Durchschlagspunkt der Isolierung austritt, sondern sich über das gesamte Hitzeschild verteilt. Um diese Funktion erfüllen zu können, müssen entsprechende Hitzeschilder eine hohe Wärmeleitfähigkeit in der Umfangsrichtung aufweisen. Außerdem müssen solche Hitzeschilder sowohl Wärmeverluste durch Wärmestrahlung als auch Wärmeverluste durch Wärmeleitung und Konvektion möglichst wirksam verhindern. Um alle diese Funktionen zu erfüllen, umfassen solche Hitzeschilder üblicherweise mehrere Lagen Graphitfolie, zwischen denen zusätzlich Gewebezwischenlagen vorgesehen sein können. Um eine ausreichende mechanische Festigkeit und Stabilität dieser Hitzeschilder zu erreichen, sind die einzelnen Lagen des Aufbaus über einen kohlenstoffhaltigen Kleber miteinander verklebt.

Allerdings enthalten solche Kleber zu einem gewissen Ausmaß nicht temperaturbeständige Bestandteile, welche sich bei erhöhter Temperatur zersetzen und in dem Kleber Blasen erzeugen. Infolge der sukzessiven Zersetzung des Klebers bei der Hochtemperaturanwendung und einer sukzessiven Abnutzung des Klebers durch die Ofenatmosphäre delaminieren mit fortschreitender Anwendungsdauer die einzelnen Graphitfolienlagen, infolge dessen das Hitzeschild seine mechanische Festigkeit und Stabilität verliert.

Aufgabe der vorliegenden Erfindung ist es daher, ein für Hochtemperaturanwendungen und insbesondere für Hochtemperaturöfen und Gaskonverter geeignetes Hitzeschild bereitzustellen, welches eine ausreichend hohe mechanische Festigkeit und Stabilität aufweist, welches diese hohe mechanische Festigkeit und Stabilität auch bei längerer Hochtemperaturanwendung, wie insbesondere einer längeren Hochtemperaturanwendung, bei welcher das Hitzeschild einer Temperatur zwischen 300 und 2.800°C ausgesetzt wird, beibehält, welches konstruktiv einfach aufgebaut ist, und, welches kostengünstig herstellbar ist.

Erfindungsgemäß wird diese Aufgabe gelöst durch die Bereitstellung eines hohlzylinderförmigen Hitzeschildes, welches wenigstens eine Graphitfolie umfasst, auf deren Außenseite wenigstens eine Faserstruktur vorgesehen ist, wobei die Faserstruktur einen Bedeckungsgrad von 5 bis 95 % aufweist. Dabei handelt es sich bei der Faserstruktur vorzugsweise um eine gewickelte Faserstruktur, ein Gewebe, ein Gestrick, ein Gewirk oder ein Gelege und besonders bevorzugt um eine gewickelte Faserstruktur.

Diese Lösung basiert auf der Erkenntnis, dass durch das Vorsehen einer Faserstruktur, wie vorzugsweise einer gewickelten Faserstruktur, auf der Außenseite einer zu einem Hohlzylinder zusammengerollten Graphitfolie, auf deren Innenseite ein oder mehrere weitere Graphitfolien angeordnet sind bzw. sein können, wobei an der Innenseite der innersten Graphitfolie ein oder mehrere Schichten aus einem Faserverbundwerkstoff und insbesondere aus einem carbonfaserverstärkten Verbundwerkstoff vorgesehen sind bzw. sein können, und wobei zwischen den einzelnen Graphitfolien optional Gewebeschichten oder Schichten aus einem Verbundwerkstoff angeordnet sind, die einzelnen Schichten fest und delaminationsfest miteinander verbunden werden, so dass - auch ohne Verwendung eines Klebers oder durch Aufbringen von Kleber lediglich an kleinen und ausgewählten Bereichen der Graphitfolie - insgesamt ein hohlzylinderförmiges Hitzeschild erhalten wird, welches eine hohe mechanische Stabilität und eine hohe mechanische Festigkeit aufweist. Insbesondere werden diese hohe mechanische Stabilität und hohe mechanische Festigkeit auch nach einer langen Hochtemperaturbehandlung und nach wiederholten Hochtemperaturbehandlungen bei Temperaturen von bis zu 2.800°C beibehalten. Aufgrund der einen Bedeckungsgrad von weniger als 100% aufweisenden Faserstruktur, vorzugsweise gewickelten Faserstruktur, wird zudem erreicht, dass trotz der durch die (gewickelte) Faserstruktur erreichten hohen mechanischen Stabilität und hohen mechanischen Festigkeit zwischen den Wicklungen bzw. Windungen der (gewickelten) Faserstruktur Zwischenräume vorhanden sind, so dass während einer Hochtemperaturanwendung die darunterliegende Graphitfolie, welche einen höheren Wärmeausdehnungskoeffizienten aufweist als die (gewickelte) Faserstruktur, zumindest bereichsweise über den bzw. die Zwischenräume expandieren kann, so dass etwaige Spannungen in dem Hitzeschild während der Temperaturbehandlung auch bei schnellen und häufigen Temperaturwechseln, welche diesen zerstören oder zumindest beschädigen können, zuverlässig vermieden werden. Aufgrund der hohen Wärmeleitfähigkeit von Graphitfolie in der Folienebene und der vergleichsweise geringen Wärmeleitfähigkeit von Graphitfolie senkrecht zu der Folienebene wird in dem erfindungsgemäßen Hitzeschild eine hervorragende Wärmeverteilung in der Umfangsrichtung des Hitzeschildes erreicht und ein Wärmeverlust infolge von Wärmeleitung zuverlässig vermieden. Ferner weisen die Graphitfolien einen hohen Wärmereflexionsgrad auf, weswegen auch ein Wärmeverlust infolge von Wärmestrahlung zuverlässig verhindert wird. Insgesamt weist somit das erfindungsgemäße Hitzeschild eine wesentlich größere Standzeit als herkömmliche Hitzeschilde auf Basis von Kleber auf. Ein weiterer Vorteil des erfindungsgemäßen Hitzeschildes ist es, dass dieses konstruktiv einfach ausgestaltet ist und daher kostengünstig hergestellt werden kann. Aufgrund alledem ist das erfindungsgemäße Hitzeschild hervorragend zur Verwendung in einem Hochtemperaturofen oder in einem Gaskonverter geeignet.

Gemäß einer besonders bevorzugten Ausführungsform der vorliegenden Erfindung ist auf der Innenseite der wenigstens einen Graphitfolie wenigstens eine Schicht aus einem Faserverbundwerkstoff vorgesehen, um dem Hitzeschild eine verbesserte mechanische Stabilität zu verleihen. Dabei kann die wenigstens eine Schicht aus dem Faserverbundwerkstoff auf der Innenseite der wenigstens einen Graphitfolie unmittelbar, d.h. direkt bzw. ohne ein oder mehrere weitere Zwischenschichten, oder getrennt über ein oder mehrere Zwischenschichten angeordnet sein. Vorzugsweise ist der Faserverbundwerkstoff bei dieser Ausführungsform carbonfaserverstärkter Kohlenstoff, also ein Verbundwerkstoff, bei dem in einer Kohlenstoff-Matrix Carbonfasern eingebettet sind, keramikfaserverstärkter Kohlenstoff, also ein Verbundwerkstoff, bei dem in einer Kohlenstoff-Matrix Keramikfasern eingebettet sind, carbonfaserverstärkte Keramik, also ein Verbundwerkstoff, bei dem in einer Keramik-Matrix Carbonfasern eingebettet sind, oder keramikfaserverstärkte Keramik, also ein Verbundwerkstoff, bei dem in einer Keramik-Matrix, beispielsweise Siliciumcarbid (SiC), Keramikfasern, wie beispielsweise SiC-Fasern, eingebettet sind.

Wie vorstehend dargelegt, weist die auf der Außenseite der wenigstens einen Graphitfolie vorgesehene (gewickelte) Faserstruktur (womit in der vorliegenden "Faserstruktur, vorzugsweise gewickelte Faserstruktur" verstanden wird), erfindungsgemäß einen Bedeckungsgrad von 5 bis 95 % auf, um während einer Temperaturbehandlung insbesondere auch bei schnellen und häufigen Temperaturwechseln das Auftreten von aus den unterschiedlichen Wärmeausdehnungskoeffizienten der Graphitfolie(n) und der (gewickelten) Faserstruktur resultierende Spannungen in dem Hitzeschild zu vermeiden. Besonders gute Ergebnisse werden diesbezüglich erhalten, wenn die (gewickelte) Faserstruktur einen Bedeckungsgrad von 10 bis 65%, besonders bevorzugt von 30 bis 55% und ganz besonders bevorzugt von 40 bis 50% aufweist. Im Sinne der vorliegenden Erfindung wird unter Bedeckungsgrad der (gewickelten) Faserstruktur das Verhältnis zwischen dem von der (gewickelten) Faserstruktur bedeckten Teil der Oberfläche der darunterliegenden Graphitfolie und der Gesamtoberfläche der Graphitfolie verstanden. Der Bedeckungsgrad kann im Fall einer gewickelten Faserstruktur beispielsweise über die Art der Wicklung der gewickelten Faserstruktur auf einen beliebigen Wert eingestellt werden, indem zwischen den einzelnen Wickelwindungen entsprechende große oder kleine Zwischenräume vorgesehen werden. Dabei können jeweils zwischen allen oder nur zwischen einzelnen Wickelwindungen entsprechende Zwischenräume ausgebildet sein.

In Weiterbildung des Erfindungsgedankens wird es vorgeschlagen, dass die gewickelte Faserstruktur eine Kreuzwicklung ist, wobei der Wickelwinkel der einzelnen Wickelwindungen bezogen auf die Hohlzylinderlängsachse vorzugsweise zwischen 5 und 88°, weiter bevorzugt zwischen 30 und 85°, besonders bevorzugt zwischen 60 und 80°, ganz besonders bevorzugt zwischen 70 und 80° und höchst bevorzugt etwa 75° beträgt. Dadurch wird auf einfache Weise eine besonders feste und delaminationsfeste Verbindung der einzelnen Schichten miteinander erreicht und es gleichzeitig ermöglicht, einfach einen wie vorstehend definierten Bedeckungsgrad der gewickelten Faserstruktur einzustellen. Unter einer Kreuzwicklung wird im Sinne der vorliegenden Erfindung eine Wicklung verstanden, bei der die Wickelwinkel der einzelnen Wickelwindungen betragsmäßig gleich sind, sich jedoch die Wickelwinkel der einzelnen Wickelwindungen benachbarter Wickellagen hinsichtlich ihres Vorzeichens unterscheiden. Ferner wird unter dem Wickelwinkel derjenige Winkel verstanden, den die Längsachse einer Wickelwindung in Bezug auf die Längsachse des hohlzylinderförmigen Hitzeschildes einnimmt.

Bezüglich der Art der die Wicklung ausbildenden Faserstruktur ist die vorliegende Erfindung nicht beschränkt. Beispielsweise kann die Faserstruktur der (gewickelten) Faserstruktur aus der Gruppe ausgewählt sein, welche aus Kordeln, Zwirnen, Garnen, Rovings, Vliesen, Geweben, Gewirken, Gestricken, Filzen, mit Matrix imprägnierten Kordeln, mit Matrix imprägnierten Zwirnen, mit Matrix imprägnierten Garnen, mit Matrix imprägnierten Rovings, mit Matrix imprägnierten Vliesen, mit Matrix imprägnierten Geweben, mit Matrix imprägnierten Gewirken, mit Matrix imprägnierten Gestricken, mit Matrix imprägnierten Filzen und beliebigen Mischungen von zwei oder mehr der vorgenannten Faserstrukturen besteht. Bevorzugt ist die Faserstruktur der (gewickelten) Faserstruktur aus der Gruppe ausgewählt, welche aus Kordeln, Zwirnen, Garnen, Rovings, Gewirken, Gestricken, Geweben, mit Matrix imprägnierten Kordeln, mit Matrix imprägnierten Zwirnen, mit Matrix imprägnierten Garnen, mit Matrix imprägnierten Rovings, mit Matrix imprägnierten Gewirken, mit Matrix imprägnierten Gestricken, mit Matrix imprägnierten Geweben und beliebigen Mischungen von zwei oder mehr der vorgenannten Faserstrukturen besteht, weil damit gleichzeitig eine besonders feste Verbindung der einzelnen Schichten miteinander erreicht wird und gleichzeitig einfach ein optimaler Bedeckungsgrad der (gewickelten) Faserstruktur eingestellt werden kann. Aus den gleichen Gründen ist es besonders bevorzugt, dass die (gewickelte) Faserstruktur ein Roving oder ein mit Matrix imprägnierter Roving ist.

In Weiterbildung des Erfindungsgedankens wird es vorgeschlagen, dass die (gewickelte) Faserstruktur ein Verbundwerkstoff ist, bei dem die Fasern mit einer Matrix imprägniert sind. Dadurch werden die gegen seitlich einwirkende Kräfte empfindlichen Fasern durch das Matrixmaterial geschützt. Dabei kann das Matrixmaterial jedes Material sein, welches Fasern wirksam vor einwirkenden Kräften schützt und zudem bei den bei der Anwendung des Hitzeschildes auftretenden Temperaturen stabil ist. Vorzugsweise ist das Matrixmaterial Kohlenstoff, wie insbesondere carbonisiertes und/oder graphitiertes Phenolharz, carbonisiertes und/oder graphitiertes Epoxidharz, carbonisierter und/oder graphitierter Novolak, carbonisiertes und/oder graphitiertes Cyanatesterharz, carbonisiertes und/oder graphitiertes Benzoxazinharz, carbonisierter und/oder graphitierter Polyester, carbonisierter und/oder graphitierter Vinylester, carbonisiertes und/oder graphitiertes Bismaleimidharz und/oder carbonisiertes und/oder graphitiertes Bisoxazolin. Dementsprechend ist die (gewickelte) Faserstruktur bevorzugt aus der Gruppe ausgewählt, welche aus mit Matrix imprägnierten Kordeln, mit Matrix imprägnierten Zwirnen, mit Matrix imprägnierten Garnen, mit Matrix imprägnierten Rovings, mit Matrix imprägnierten Vliesen, mit Matrix imprägnierten Geweben, mit Matrix imprägnierten Gewirken, mit Matrix imprägnierten Gestricken, mit Matrix imprägnierten Filzen und beliebigen Mischungen von zwei oder mehr der vorgenannten Faserstrukturen besteht, wobei die Matrix aus einem Material zusammengesetzt ist, welches aus der Gruppe ausgewählt ist, welche aus carbonisierten und/oder graphitierten Phenolharzen, Epoxidharzen, Novolaken, Cyanatesterharzen, Benzoxazinharzen, Polyestern, Vinylestern, Bismaleimidharzen, Bisoxazolinen und beliebigen Mischungen von zwei oder mehr der vorgenannten Materialien besteht. Besonders bevorzugt ist die (gewickelte) Faserstruktur ein mit carbonisiertem und/oder graphitiertem Epoxidharzharz imprägnierter Roving und/oder ein mit carbonisiertem und/oder graphitiertem Epoxidharzharz imprägnierter Zwirn und/oder ein mit carbonisiertem und/oder graphitiertem Epoxidharzharz imprägniertes Garn und/oder eine mit carbonisiertem und/oder graphitiertem Epoxidharzharz imprägnierte Kordel.

Gemäß einer weiteren bevorzugten Ausführungsform der vorliegenden Erfindung ist es vorgesehen, dass die Fasern der (gewickelten) Faserstruktur Carbonfasern und/oder Keramikfasern sind, wobei im Falle von Keramikfasern Siliciumcarbidfasern besonders bevorzugt sind. Derartige Fasern sind besonders reißfest sowie beständig gegenüber hohen Temperaturen bis 2.800°C und führen daher zu einer dauerhaft stabilen Verbindung der einzelnen Schichten untereinander.

Im Falle von Carbonfasern ist es bevorzugt, dass die Carbonfasern einen Kohlenstoffgehalt von wenigstens 60 Gew.-%, weiter bevorzugt von wenigstens 80 Gew.-%, insbesondere bevorzugt von wenigstens 90 Gew.-%, besonders bevorzugt von wenigstens 95 Gew.-%, ganz besonders bevorzugt von wenigstens 99 Gew.-% und höchst bevorzugt von wenigstens 99,5 Gew.-% aufweisen.

Dabei kann es sich bei den Carbonfasern um solche handeln, welche aus entsprechenden Vorläuferfasern, wie beispielsweise Polyacrylnitrilfasern, durch Carbonisieren bei einer Temperatur zwischen 600 und 1.200°C und/oder durch Graphitieren bei einer Temperatur zwischen 2.000 und 2.800°C hergestellt worden sind.

Grundsätzlich ist die vorliegende Erfindung bezüglich der Dimensionen der die (gewickelte) Faserstruktur ausbildenden Fasern nicht beschränkt. Gute Ergebnisse werden dabei insbesondere erhalten, wenn die Fasern der (gewickelten) Faserstruktur Carbonfasern mit einem Durchmesser von 3 bis 20 µm und/oder Siliciumcarbidfasern mit einem Durchmesser von 3 bis 20 µm sind.

Auch bezüglich der Länge der die (gewickelte) Faserstruktur ausbildenden Fasern ist die vorliegende Erfindung nicht beschränkt. Insbesondere kann es sich bei den Fasern um Endlosfasern oder um Fasern, insbesondere Carbonfasern und/oder Siliciumcarbidfasern, mit einer Länge zwischen 6 und 100 mm handeln.

In Abhängigkeit von der Anzahl und der Dicke der eingesetzten Graphitfolie(n) und der/den zusätzlichen Schicht(en) aus Faserverbundwerkstoff kann die (gewickelte) Faserstruktur eine Faserstruktur-Lage oder mehrere Faserstruktur-Lagen umfassen, wie beispielsweise 1 bis 10, 2 bis 7, 4 bis 6 oder 5. Dabei beträgt die Dicke der (gewickelten) Faserstruktur, also die Summe der Dicken aller Faserstruktur-Lagen, vorzugsweise 0,05 bis 5 mm, besonders bevorzug 0,1 bis 3 mm und ganz besonders bevorzugt 0,2 bis 1 mm.

Um eine besonders gute Wärmeverteilung in der Umfangsrichtung des Hitzeschildes zu erreichen, wird es in Weiterbildung des Erfindungsgedankens vorgeschlagen, dass die wenigstens eine Graphitfolie eine Wärmeleitfähigkeit in der Folienebene von 50 bis 1.500 W/(m·K) aufweist. Besonders gute Ergebnisse werden diesbezüglich erreicht, wenn die wenigstens eine Graphitfolie eine Wärmeleitfähigkeit in der Folienebene von 100 bis 800 W/(m·K) und besonders bevorzugt von 120 bis 600 W/(m·K) aufweist.

Um eine Wärmeabfuhr durch die wenigstens eine Graphitfolie und damit von dem Hitzeschild nach außen zu vermeiden, ist es gemäß einer weiteren bevorzugten Ausführungsform der vorliegenden Erfindung vorgesehen, dass die wenigstens eine Graphitfolie eine Wärmeleitfähigkeit senkrecht zu der Folienebene von 1 bis 50 W/(m·K), bevorzugt von 1 bis 20 W/(m·K) und besonders bevorzugt von 2 bis 8 W/(m·K) aufweist.

Wie dargelegt, ist einerseits die Wärmeleitfähigkeit der wenigstens einen Graphitfolie in der Folienebene vorzugsweise hoch, um eine Wärmeverteilung in der Umfangsrichtung des Hitzeschildes zu erreichen, und andererseits die Wärmeleitfähigkeit der wenigstens einen Graphitfolie senkrecht zu der Folienebene vorzugsweise niedrig, um eine Wärmeabfuhr durch die Graphitfolie hindurch zu vermeiden. Aus diesem Grund ist es bevorzugt, dass das Verhältnis der Wärmeleitfähigkeit der wenigstens einen Graphitfolie in der Folienebene zu der Wärmeleitfähigkeit der wenigstens einen Graphitfolie senkrecht zu der Folienebene mehr als 5:1, bevorzugt mehr als 20:1 und besonders bevorzugt mehr als 30:1 beträgt.

Ferner ist es bevorzugt, dass die wenigstens eine Graphitfolie, bei Prüfmedium Helium und bei einer Druckdifferenz von 1 bar, eine Gasdurchlässigkeit von 5 bis 0,005 mg/m^{2.}s, bevorzugt von 1,0 bis 0,01 mg/m^{2.}s und besonders bevorzugt von 0,8 bis 0,05 mg/m^{2.}s aufweist.

Gemäß einer weiteren bevorzugten Ausführungsform der vorliegenden Erfindung besteht die wenigstens eine Graphitfolie aus Naturgraphit. Dies ist deshalb bevorzugt, weil Naturgraphit im Vergleich zu synthetischem Graphit aufgrund einer besseren Gitterqualität und eines höheren Graphitierungsgrades einen höheren Anisotropiegrad und infolge dessen ein größeres Verhältnis der Wärmeleitfähigkeit in der Gitterebene zu der Wärmeleitfähigkeit senkrecht zu der Gitterebene aufweist. Gute Ergebnisse sowohl im Hinblick auf eine gute Biegsamkeit der Graphitfolie als auch im Hinblick auf eine hinreichend große Wärmereflexion der Graphitfolie werden insbesondere erhalten, wenn die wenigstens eine Graphitfolie aus Naturgraphit eine Dicke von 0,1 bis 3 mm aufweist.

Das erfindungsgemäße Hitzeschild kann eine Lage einer Graphitfolie enthalten, welche vorzugsweise hohlzylinderförmig ausgebildet ist. Alternativ dazu kann das erfindungsgemäße Hitzeschild in Abhängigkeit von der geplanten Anwendung mehrere übereinander liegende Lagen aus Graphitfolie aufweisen, was zum Beispiel dadurch erreicht werden kann, dass eine Graphitfolie beispielsweise durch Schnecken- oder Spiralwicklung so zusammengerollt wird, dass mehrere Lagen der Graphitfolie übereinander bündig oder versetzt zueinander angeordnet sind. Alternativ dazu können auch Schichten mehrerer Graphitfolien übereinander angeordnet sein, wobei in diesem Fall zwischen den einzelnen Schichten Zwischenschichten, beispielsweise aus Gewebe oder carbonfaserverstärktem Kohlenstoff, angeordnet sein können. Dabei können die einzelnen Graphitfolien gleiche oder voneinander verschiedene Eigenschaften aufweisen. Vorzugsweise umfasst das erfindungsgemäße Hitzeschild 1 bis 40 und bevorzugt 5 bis 20 übereinander angeordnete Lagen einer Graphitfolie und/oder 5 bis 40 und bevorzugt 8 bis 20 Schichten von Graphitfolien, wobei die einzelnen Lagen bzw. die einzelnen Schichten jeweils hohlzylinderförmig ausgestaltet sind. Bei dieser Ausführungsform kann zwischen den einzelnen Lagen bzw. Schichten bereichsweise Kleber vorgesehen werden, wie beispielsweise carbonisierter Kleber, wie zum Beispiel carbonisierter Kleber auf Basis von Epoxidharz.

Sofern das erfindungsgemäße Hitzeschild mehrere Lagen oder Schichten Graphitfolie enthält, beträgt die Gesamtdicke der Graphitfolienlagen bzw. Graphitfolienschichten sowohl im Hinblick auf eine gute Wärmeverteilung in der Folienumfangsrichtung als auch im Hinblick auf eine hinreichend große Wärmereflexion vorzugsweise 1 bis 30 mm, besonders bevorzugt 5 bis 20 mm, ganz besonders bevorzugt 7,5 bis 15 mm und höchst bevorzugt etwa 10 mm.

In Weiterbildung des Erfindungsgedankens wird es vorgeschlagen, dass die wenigstens eine Graphitfolie einen nach der DIN EN 11885 ICP-OES bestimmten Aschegehalt von maximal 5%, bevorzugt von maximal 2%, besonders bevorzugt von maximal 0,15%, ganz besonders bevorzugt von maximal 100 ppm und höchst bevorzugt von maximal 5 ppm aufweist. Durch einen entsprechend großen Reinheitsgrad der Graphitfolie(n) wird es erreicht, dass eine Kontamination der Ofenatmosphäre bei einer Hochtemperaturanwendung mit Verunreinigungen wirksam vermieden wird.

Wie vorstehend dargelegt, ist es gemäß einer besonders bevorzugten Ausführungsform der vorliegenden Erfindung vorgesehen, auf der Innenseite der wenigstens einen Graphitfolie wenigstens eine Schicht aus einem Faserverbundwerkstoff vorzusehen, um dem Hitzeschild eine verbesserte mechanische Stabilität zu verleihen. Bei dieser Ausführungsform ist die in der wenigstens einen Schicht aus Faserverbundwerkstoff enthaltene Faserstruktur vorzugsweise aus der Gruppe ausgewählt, welche aus Rovings, Vliesen, Geweben, Gewirken, Gestricken, Filzen und beliebigen Mischungen von zwei oder mehr der vorgenannten Faserstrukturen besteht.

Bezüglich der Art des Materials der Matrix der wenigstens einen Schicht aus Faserverbundwerkstoff ist die vorliegende Erfindung nicht beschränkt. Gute Ergebnisse werden jedoch insbesondere erhalten, wenn die Matrix der wenigstens einen Schicht aus Faserverbundwerkstoff aus einem Material zusammengesetzt ist, welches aus der Gruppe ausgewählt ist, welche aus carbonisierten und/oder graphitierten Phenolharzen, carbonisierten und/oder graphitierten Epoxidharzen, carbonisierten und/oder graphitierten Novolaken, carbonisierten und/oder graphitierten Cyanatesterharzen, carbonisierten und/oder graphitierten Benzoxazinharzen, carbonisierten und/oder graphitierten Polyestern, carbonisierten und/oder graphitierten Vinylestern, carbonisierten und/oder graphitierten Bismaleimidharzen, carbonisierten und/oder graphitierten Bisoxazolinen und beliebigen Mischungen von zwei oder mehr der vorgenannten Materialien besteht. Besonders bevorzugt ist die Matrix aus carbonisiertem und/oder graphitiertem Phenolharz zusammengesetzt.

In Weiterbildung des Erfindungsgedankens wird es vorgeschlagen, dass die Fasern der wenigstens einen Schicht aus Faserverbundwerkstoff Carbonfasern und/oder Keramikfasern, bevorzugt Siliciumcarbidfasern, sind, da derartige Fasern besonders reißfest sowie beständig gegenüber hohen Temperaturen bis 2.800°C sind.

Im Falle von Carbonfasern ist es bevorzugt, dass die Carbonfasern der wenigstens einen Schicht aus Faserverbundwerkstoff einen Kohlenstoffgehalt von wenigstens 60 Gew.-%, weiter bevorzugt von wenigstens 80 Gew.-%, insbesondere bevorzugt von wenigstens 90 Gew.-%, besonders bevorzugt von wenigstens 95 Gew.-%, ganz besonders bevorzugt von wenigstens 99 Gew.-% und höchst bevorzugt von wenigstens 99,5 Gew.-% aufweisen.

Auch bei diesen Carbonfasern handelt es sich bevorzugt um solche, welche aus entsprechenden Vorläuferfasern, wie beispielsweise Polyacrylnitrilfasern, durch Carbonisieren bei einer Temperatur zwischen 600 und 1.200°C oder durch Graphitieren bei einer Temperatur zwischen 2.000 und 2.800°C hergestellt worden sind.

Grundsätzlich ist die vorliegende Erfindung bezüglich der Dimensionen der den Faserverbundwerkstoff ausbildenden Fasern nicht beschränkt. Gute Ergebnisse werden dabei insbesondere erhalten, wenn die Fasern der (gewickelten) Faserstruktur Carbonfasern mit einem Durchmesser von 3 bis 20 µm und/oder Siliciumcarbidfasern mit einem Durchmesser von 3 bis 20 µm sind.

Auch bezüglich der Länge der den Faserverbundwerkstoff ausbildenden Fasern ist die vorliegende Erfindung nicht beschränkt. Insbesondere kann es sich bei den Fasern um Endlosfasern oder um Fasern, insbesondere Carbonfasern und/oder Siliciumcarbidfasern, mit einer Länge zwischen 6 und 100 mm handeln.

In Abhängigkeit von der geplanten Anwendung kann das erfindungsgemäße Hitzeschild ein oder mehrere Schichten aus Faserverbundwerkstoff umfassen. Gute Ergebnisse werden dabei insbesondere erhalten, wenn das Hitzeschild 1 bis 50, bevorzugt 1 bis 30 und besonders bevorzugt 1 bis 15, wie beispielsweise 7 oder 8, Schichten aus Faserverbundwerkstoff umfasst. Dabei können die einzelnen Schichten, welche vorzugsweise übereinander laminiert sind, gleich oder verschieden voneinander sein.

In einer beispielhaften Ausführungsform der vorliegenden Erfindung umfasst das Hitzeschild 1 bis 30 und bevorzugt 3 bis 15 Schichten aus Faserverbundwerkstoff und vorzugsweise aus mit Kohlenstoffmatrix imprägnierten Carbonfaserrovings und/oder Carbonfasergeweben, welche übereinander laminiert angeordnet sind.

In einer anderen beispielhaften Ausführungsform der vorliegenden Erfindung umfasst das Hitzeschild 1 bis 30 und bevorzugt 3 bis 15 Schichten aus Faserverbundwerkstoff und vorzugsweise aus mit Kohlenstoffmatrix imprägnierten Carbonfaserrovings und/oder Carbonfasergeweben, welche übereinander gewickelt sind.

Die beiden vorgenannten Ausführungsformen können auch miteinander kombiniert werden, so dass das Hitzeschild 1 bis 30 und bevorzugt 3 bis 15 Schichten aus Faserverbundwerkstoff und vorzugsweise aus mit Kohlenstoffmatrix imprägnierten Carbonfaserrovings und/oder Carbonfasergeweben umfasst, von denen einige übereinander laminiert angeordnet und einige übereinander gewickelt sind.

Bei den beiden letztgenannten Ausführungsform können sich die auf die Hohlzylinderlängsachse bezogenen Wickelwinkel der einzelnen Schichten beispielsweise um wenigstens 10°, bevorzugt um wenigstens 20° und besonders bevorzugt um wenigstens 30° voneinander unterscheiden.

Um eine ausreichende mechanische Stabilität des Hitzeschildes zu erzielen, wird es in Weiterbildung des Erfindungsgedankens vorgeschlagen, dass die Summe der Dicken aller auf der Innenseite der wenigstens einen Graphitfolie angeordneten Schichten aus Faserverbundwerkstoff 0,1 bis 10 mm und bevorzugt 2 bis 4 mm beträgt.

In einer weiteren optionalen Ausführungsform der vorliegenden Erfindung umfasst das Hitzeschild wenigstens zwei Graphitfolien sowie wenigstens eine Zwischenschicht, wobei die wenigstens eine Zwischenschicht zwischen der wenigstens einen Schicht aus Faserverbundwerkstoff und einer der Graphitfolien vorgesehen ist. Dabei kann die Anzahl der Zwischenschichten 1 bis 50, bevorzugt 1 bis 20 und besonders bevorzugt 1 bis 10 betragen. Als Material für die Zwischenschicht(en) kann jedes temperaturbeständige Material eingesetzt werden.

Ferner ist es bevorzugt, dass das erfindungsgemäße Hitzeschild einen nach der DIN EN 11885 ICP-OES bestimmten Aschegehalt von maximal 5%, bevorzugt von maximal 2%, besonders bevorzugt von maximal 0,15%, ganz besonders bevorzugt von maximal 100 ppm und höchst bevorzugt von maximal 5 ppm aufweist. Durch einen so hohen Reinheitsgrad des Hitzeschildes kann eine Kontamination der Ofenatmosphäre bei einer Hochtemperaturanwendung mit Verunreinigungen wirksam vermieden werden.

Ein weiterer Gegenstand der vorliegenden Erfindung ist die Verwendung des zuvor beschriebenen Hitzeschildes in einem Hochtemperaturofen oder in einem Gaskonverter. Insbesondere eignet sich das erfindungsgemäße Hitzeschild für Anwendungen, bei denen dieses beispielsweise in einem Hochtemperaturofen oder in einem Gaskonverter in einer Intertgasatmosphäre oder unter Vakuum einer Temperatur von bis zu 2.800°C ausgesetzt wird, oder bei denen dieses beispielsweise in einem Hochtemperaturofen oder in einem Gaskonverter in Luft einer Temperatur von bis zu 300°C ausgesetzt wird.

Nachfolgend wird die Erfindung anhand von einem diese erläuternden, diese aber nicht einschränkenden Beispiel unter Bezugnahme auf die Zeichnungen weiter beschrieben. Dabei zeigt die
- Fig. 1: eine schematische Querschnittsansicht eines Hitzeschildes gemäß eines Ausführungsbeispiels der vorliegenden Erfindung und die
- Fig. 2: einen Ausschnitt einer schematischen Seitenansicht des in der Fig. 1 gezeigten Hitzeschildes.

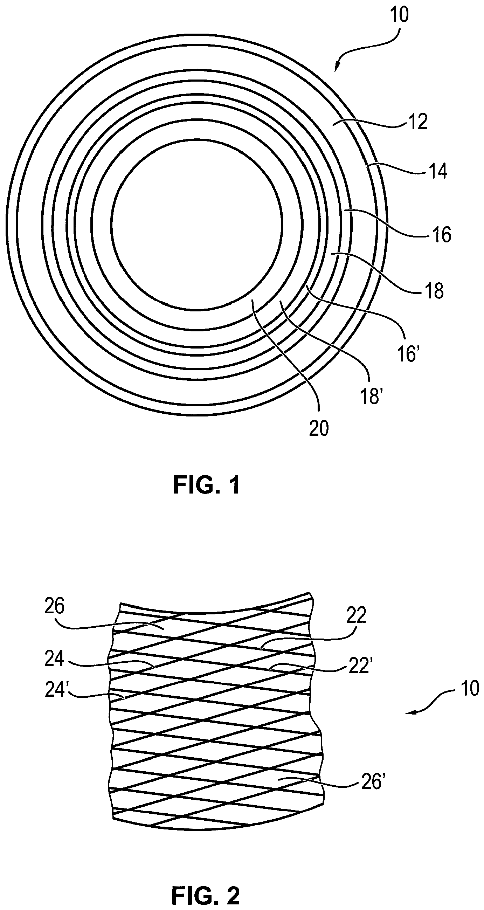

Das in der Fig. 1 gezeigte Hitzeschild 10 ist hohlzylinderförmig ausgestaltet und umfasst eine Graphitfolie 12, welche zu einem zehn bündig und direkt übereinanderliegenden Lagen umfassenden Hohlzylinder aufgerollt ist. Während auf der Außenseite der - von der Mittelachse des Hohlzylinders aus gesehen - äußersten Lage der Graphitfolie 12 eine gewickelte Faserstruktur 14 in der Form einer Kreuzwicklung aus kohlenstoffimprägnierten Carbonfasern aufgebracht ist, ist auf der Innenseite der innersten Lage der Graphitfolie 12 eine Faserverbundwerkstoffschicht aus gewickelten kohlenstoffimprägnierten Carbonfasern mit einem ersten Wickelwinkel 16 angeordnet. Auf der Innenseite der Faserverbundwerkstoffschicht 16 wiederum ist eine Faserverbundwerkstoffschicht aus gewickelten kohlenstoffimprägnierten Carbonfasern mit einem zweiten Wickelwinkel 18, auf deren Innenseite eine weitere Faserverbundwerkstoffschicht aus gewickelten kohlenstoffimprägnierten Carbonfasern mit dem ersten Wickelwinkel 16', auf deren Innenseite eine weitere Faserverbundwerkstoffschicht aus gewickelten kohlenstoffimprägnierten Carbonfasern mit dem zweiten Wickelwinkel 18' und auf deren Innenseite eine Schicht aus Faserverbundwerkstoff 20 in Form von carbonfasergewebeverstärktem Kohlenstoff angeordnet. Während die äußere gewickelte Faserstruktur 14 die Graphitfolie 12 und die Faserverbundwerkstoffschichten 16, 16', 18, 18', 20 fest und delaminationsfest miteinander verbindet, wobei diese feste Verbindung aufgrund der Temperaturbeständigkeit von Carbonfasern auch nach einer langen Hochtemperaturbehandlung und nach wiederholten Hochtemperaturbehandlungen bis zu Temperaturen von 2.800°C beibehalten wird, verleihen die äußere gewickelte Faserstruktur 14, die innerste Faserverbundwerkstoffschicht 20 und die Faserverbundwerkstoffschichten 16, 16', 18, 18' dem Hitzeschild 10 eine exzellente mechanische Stabilität und stabilisieren insbesondere die Graphitfolie 12. Die Graphitfolie 12 wiederum reflektiert Wärmestrahlung und führt zu einer hervorragenden Wärmeverteilung in der Umfangsrichtung des Hitzeschildes.

Wie schematisch in der Fig. 2 dargestellt, besteht die gewickelte Faserstruktur 14 aus einer Kreuzwicklung, welche erste Wickelwindungen 22, 22' mit einem ersten Wickelwinkel aufweist und zweite Wickelwindungen 24, 24' mit einem zweiten Wickelwinkel aufweist, wobei der erste Wickelwinkel und der zweite Wickelwinkel betragsmäßig gleich sind, sich beide Wickelwinkel aber hinsichtlich ihres Vorzeichens unterscheiden. Wie aus der Fig. 2 ersichtlich, weist die gewickelte Faserstruktur 14 einen Bedeckungsgrad, also ein Verhältnis zwischen dem von der gewickelten Faserstruktur 14 bedeckten Teil der Oberfläche der darunterliegenden Graphitfolie 12 und der Gesamtoberfläche der Graphitfolie 12, von 5 bis 95 %, in dem vorliegenden Fall von etwa 35%, auf. Aufgrund dieses geringen Bedeckungsgrades der gewickelten Faserstruktur wird erreicht, dass - trotz der durch die gewickelte Faserstruktur erreichten hohen mechanischen Stabilität und hohen mechanischen Festigkeit - zwischen den Windungen 22, 22', 24, 24' der gewickelten Faserstruktur 14 Zwischenräume 26, 26' vorhanden sind, so dass während einer Hochtemperaturanwendung die darunterliegende Graphitfolie 12, welche einen höheren Wärmeausdehnungskoeffizienten aufweist als die gewickelte Faserstruktur 14, zumindest bereichsweise über den bzw. die Zwischenräume 26, 26' expandieren kann, so dass etwaige Spannungen in dem Hitzeschild 10 während der Temperaturbehandlung auch bei schnellen und häufigen Temperaturwechseln, welche diesen zerstören oder zumindest beschädigen können, zuverlässig vermieden werden.

### Bezugszeichenliste:

- 10: Hitzeschild
- 12: Graphitfolie
- 14: (gewickelte) Faserstruktur/Kreuzwicklung aus kohlenstoffimprägnierten Carbonfasern
- 16, 16': Faserverbundwerkstoffschicht/gewickelte kohlenstoffimprägnierte Carbonfasern mit einem ersten Wickelwinkel
- 18, 18': Faserverbundwerkstoffschicht/gewickelte kohlenstoffimprägnierte Carbonfasern mit einem zweiten Wickelwinkel
- 20: Faserverbundwerkstoffschicht /carbonfasergewebeverstärkter Kohlenstoff
- 22, 22': erste Wickelwindungen der gewickelten Faserstruktur
- 24, 24': zweite Wickelwindungen der gewickelten Faserstruktur
- 26, 26': Zwischenräume der gewickelten Faserstruktur

## Patentansprüche

1. Hohlzylinderförmiges Hitzeschild (10), welches wenigstens eine Graphitfolie (12) umfasst, auf deren Außenseite wenigstens eine Faserstruktur (14) vorgesehen ist, wobei die Faserstruktur (14) einen Bedeckungsgrad von 5 bis 95%, aufweist.

2. Hitzeschild (10) nach Anspruch 1,
dadurch **gekennzeichne**t, dass
die wenigstens eine Faserstruktur (14) eine gewickelte Faserstruktur (14), ein Gewebe, ein Gestrick, ein Gewirk oder ein Gelege ist.

3. Hitzeschild (10) nach Anspruch 1 oder 2,
**dadurch gekennzeichnet , dass**
auf der Innenseite der wenigstens einen Graphitfolie (12), unmittelbar oder getrennt über ein oder mehrere Zwischenschichten, wenigstens eine Schicht aus einem Faserverbundwerkstoff (16, 16', 18, 18', 20) vorgesehen ist, wobei der Faserverbundwerkstoff carbonfaserverstärkter Kohlenstoff, keramikfaserverstärkter Kohlenstoff, carbonfaserverstärkte Keramik oder keramikfaserverstärkte Keramik ist.

4. Hitzeschild (10) nach zumindest einem der vorstehenden Ansprüche,
**dadurch gekennzeichnet, dass**
die Faserstruktur (14) einen Bedeckungsgrad von 10 bis 65%, besonders bevorzugt von 30 bis 55% und ganz besonders bevorzugt von 40 bis 50% aufweist.

5. Hitzeschild (10) nach zumindest einem der vorstehenden Ansprüche,
**dadurch gekennzeichnet , dass**
die Faserstruktur (14) eine Kreuzwicklung ist, wobei der Wickelwinkel der einzelnen Wickelwindungen bezogen auf die Hohlzylinderlängsachse zwischen 5 und 88°, bevorzugt zwischen 30 und 85°, besonders bevorzugt zwischen 60 und 80°, ganz besonders bevorzugt zwischen 70 und 80° und höchst bevorzugt 75° beträgt.

6. Hitzeschild (10) nach zumindest einem der vorstehenden Ansprüche,
**dadurch gekennzeichnet ,dass**
die Faserstruktur (14) aus der Gruppe ausgewählt ist, welche aus mit Matrix imprägnierten Kordeln, mit Matrix imprägnierten Zwirnen, mit Matrix imprägnierten Garnen, mit Matrix imprägnierten Rovings, mit Matrix imprägnierten Vliesen, mit Matrix imprägnierten Geweben, mit Matrix imprägnierten Gewirken, mit Matrix imprägnierten Gestricken, mit Matrix imprägnierten Filzen und beliebigen Mischungen von zwei oder mehr der vorgenannten Faserstrukturen besteht, wobei die Matrix aus einem Material zusammengesetzt ist, welches aus der Gruppe ausgewählt ist, welche aus carbonisierten und/oder graphitierten Phenolharzen, Epoxidharzen, Novolaken, Cyanatesterharzen, Benzoxazinharzen, Polyestern, Vinylestern, Bismaleimidharzen, Bisoxazolinen und beliebigen Mischungen von zwei oder mehr der vorgenannten Materialien besteht.

7. Hitzeschild (10) nach zumindest einem der vorstehenden Ansprüche,
**dadurch gekennzeichnet, dass**
die Fasern der Faserstruktur (14) Carbonfasern und/oder Keramikfasern, bevorzugt Siliciumcarbidfasern, sind.

8. Hitzeschild (10) nach zumindest einem der vorstehenden Ansprüche,
**dadurch gekennzeichnet, dass**
die Faserstruktur (14) eine oder wenigstens zwei Lagen umfasst, wobei die Dicke der Faserstruktur (14) vorzugsweise 0,05 bis 5 mm, besonders bevorzugt 0,1 bis 3 mm und ganz besonders bevorzugt 0,2 bis 1 mm beträgt.

9. Hitzeschild (10) nach zumindest einem der vorstehenden Ansprüche,
**dadurch gekennzeichnet , dass**
das Verhältnis der Wärmeleitfähigkeit der wenigstens einen Graphitfolie (12) in der Folienebene zu der Wärmeleitfähigkeit der wenigstens einen Graphitfolie (12) senkrecht zu der Folienebene mehr als 5:1, bevorzugt mehr als 20:1 und besonders bevorzugt mehr als 30:1 beträgt

10. Hitzeschild (10) nach zumindest einem der vorstehenden Ansprüche,
**dadurch gekennzeichnet, dass**
dieses 1 bis 40 und bevorzugt 5 bis 20 übereinander angeordnete Lagen einer Graphitfolie (12) und/oder 5 bis 40 und bevorzugt 8 bis 20 Schichten verschiedener Graphitfolien (12) aufweisen.

11. Hitzeschild (10) nach Anspruch 3,
**dadurch gekennzeichnet, dass**
die in der wenigstens einen Schicht aus Faserverbundwerkstoff (20) enthaltene Faserstruktur aus der Gruppe ausgewählt ist, welche aus Rovings, Vliesen, Geweben, Gewirken, Gestricken, Filzen und beliebigen Mischungen von zwei oder mehr der vorgenannten Faserstrukturen besteht.

12. Hitzeschild (10) nach Anspruch 3 oder 11,
**dadurch gekennzeichnet, dass**
die Matrix der wenigstens einen Schicht aus Faserverbundwerkstoff (20) aus einem Material zusammengesetzt, welches aus der Gruppe ausgewählt ist, welche aus carbonisierten und/oder graphitierten Phenolharzen, Epoxidharzen, Novolaken, Cyanatesterharzen, Benzoxazinharzen, Polyestern, Vinylestern, Bismaleimidharzen, Bisoxazolinen und beliebigen Mischungen von zwei oder mehr der vorgenannten Materialien besteht.

13. Hitzeschild (10) nach zumindest einem der Ansprüche 3, 11 oder 12,
**dadurch gekennzeichnet, dass**
die Fasern der wenigstens einen Schicht aus Faserverbundwerkstoff (20) Carbonfasern und/oder Keramikfasern, bevorzugt Siliciumcarbidfasern, sind.

14. Hitzeschild (10) nach zumindest einem der vorstehenden Ansprüche,
**dadurch gekennzeichnet , dass**
dieses einen nach der DIN EN 11885 ICP-OES bestimmten Aschegehalt von maximal 5%, bevorzugt von maximal 2%, besonders bevorzugt von maximal 0,15%, ganz besonders bevorzugt von maximal 100 ppm und höchst bevorzugt von maximal 5 ppm aufweist.

15. Verwendung eines Hitzeschildes (10) nach zumindest einem der vorstehenden Ansprüche in einem Hochtemperaturofen oder in einem Gaskonverter.

## Claims

1. Hollow-cylindrical heat shield (10) which comprises at least one graphite foil (12), on the outside of which at least one fibre structure (14) is provided, wherein the fibre structure (14) has a degree of coverage of from 5 to 95%.

2. Heat shield (10) according to claim 1,
**characterised in that**
the at least one fibre structure (14) is a wound fibre structure (14), a woven fabric, a weft knitted fabric, a warp knitted fabric or a non-crimp fabric.

3. Heat shield (10) according to either claim 1 or claim 2,
**characterised in that**
at least one layer made of a fibre composite material (16, 16', 18, 18', 20) is provided, directly or in a manner separated by one or more intermediate layers, on the inside of the at least one graphite foil (12), the fibre composite material being carbon fibre reinforced carbon, ceramic fibre reinforced carbon, carbon fibre reinforced ceramic or ceramic fibre reinforced ceramic.

4. Heat shield (10) according to at least one of the preceding claims,
**characterised in that**
the fibre structure (14) has a degree of coverage of from 10 to 65%, particularly preferably from 30 to 55%, and very particularly preferably from 40 to 50%,

5. Heat shield (10) according to at least one of the preceding claims,
**characterised in that**
the fibre structure (14) is a cross winding, the winding angle of the individual winding turns relative to the hollow cylinder longitudinal axis being between 5 and 88°, preferably between 30 and 85°, particularly preferably between 60 and 80°, very particularly preferably between 70 and 80°, and most preferably 75°.

6. Heat shield (10) according to at least one of the preceding claims,
**characterised in that**
the fibre structure (14) is selected from the group consisting of cords impregnated with matrix, twines impregnated with matrix, yarns impregnated with matrix, rovings impregnated with matrix, non-woven fabrics impregnated with matrix, woven fabrics impregnated with matrix, warp knitted fabrics impregnated with matrix, weft knitted fabrics impregnated with matrix, felts impregnated with matrix and any mixtures of two or more of the aforementioned fibre structures, the matrix being composed of a material selected from the group consisting of carbonised and/or graphitised phenolic resins, epoxy resins, novolaks, cyanate ester resins, benzoxazine resins, polyesters, vinyl esters, bismaleimide resins, bisoxazolines and any mixtures of two or more of the aforementioned materials.

7. Heat shield (10) according to at least one of the preceding claims,
**characterised in that**
the fibres of the fibre structure (14) are carbon fibres and/or ceramic fibres, preferably silicon carbide fibres.

8. Heat shield (10) according to at least one of the preceding claims,
**characterised in that**
the fibre structure (14) comprises one or at least two plies, the thickness of the fibre structure (14) preferably being 0.05 to 5 mm, particularly preferably 0.1 to 3 mm and very particularly preferably 0.2 to 1 mm.

9. Heat shield (10) according to at least one of the preceding claims,
**characterised in that**
the ratio of the thermal conductivity of the at least one graphite foil (12) in the foil plane to the thermal conductivity of the at least one graphite foil (12) perpendicular to the foil plane is greater than 5:1, preferably greater than 20:1 and particularly preferably greater than 30:1.

10. Heat shield (10) according to at least one of the preceding claims,
**characterised in that**
it comprises 1 to 40 and preferably 5 to 20 plies of a graphite foil (12) that are arranged one above the other and/or 5 to 40 and preferably 8 to 20 layers of different graphite foils (12).

11. Heat shield (10) according to claim 3,
**characterised in that**
the fibre structure contained in the at least one layer made of fibre composite material (20) is selected from the group consisting of rovings, non-woven fabrics, woven fabrics, warp knitted fabrics, weft knitted fabrics, felts and any mixtures of two or more of the aforementioned fibre structures.

12. Heat shield (10) according to either claim 3 or claim 11,
**characterised in that**
the matrix of the at least one layer made of fibre composite material (20) is composed of a material selected from the group consisting of carbonised and/or graphitised phenolic resins, epoxy resins, novolaks, cyanate ester resins, benzoxazine resins, polyesters, vinyl esters, bismaleimide resins, bisoxazolines and any mixtures of two or more of the aforementioned materials.

13. Heat shield (10) according to at least one of claims 3, 11 or 12,
**characterised in that**
the fibres of the at least one layer made of fibre composite material (20) are carbon fibres and/or ceramic fibres, preferably silicon carbide fibres.

14. Heat shield (10) according to at least one of the preceding claims,
**characterised in that**
it comprises an ash content, determined according to DIN EN 11885 ICP-OES, of at most 5%, preferably at most 2%, particularly preferably at most 0.15%, very particularly preferably at most 100 ppm and most preferably at most 5 ppm.

15. Use of a heat shield (10) according to at least one of the preceding claims in a high-temperature furnace or in a gas converter.

## Revendications

1. Écran thermique en forme de cylindrique creux (10) comprenant au moins une feuille de graphite (12) à l'extérieur de laquelle est prévue au moins une structure fibreuse (14), la structure fibreuse (14) ayant un taux de couverture compris entre 5 et 95 %.

2. Écran thermique (10) selon la revendication 1,
**caractérisé en ce que**
l'au moins une structure fibreuse (14) est une structure fibreuse enroulée (14), un tissu, un tricot, un tissu maillé ou un treillis.

3. Écran thermique (10) selon la revendication 1 ou 2,
**caractérisé en ce**
**qu'**au moins une couche en un matériau composite fibreux (16, 16', 18, 18', 20) est prévue sur la face intérieure de l'au moins une feuille de graphite (12), directement ou séparément par le biais d'une ou de plusieurs couches intermédiaires, le matériau composite fibreux étant du carbone renforcé par des fibres de carbone, du carbone renforcé par des fibres de céramique, de la céramique renforcée par des fibres de carbone ou de la céramique renforcée par des fibres de céramique.

4. Écran thermique (10) selon au moins l'une des revendications précédentes,
**caractérisé en ce que**
la structure fibreuse (14) a un taux de couverture compris entre 10 et 65 %, de manière particulièrement préférée entre 30 et 55 %, et de manière tout particulièrement préférée entre 40 et 50 %.

5. Écran thermique (10) selon au moins l'une des revendications précédentes,
**caractérisé en ce que**
la structure fibreuse (14) est un bobinage croisé, l'angle d'enroulement des enroulements de bobine individuels étant compris entre 5 et 88°, de préférence entre 30 et 85°, de manière particulièrement préférée entre 60 et 80°, de manière tout particulièrement préférée entre 70 et 80° et de manière préférée entre toutes 75° par rapport à l'axe longitudinal du cylindre creux.

6. Écran thermique (10) selon au moins l'une des revendications précédentes,
**caractérisé en ce que**
la structure fibreuse (14) est choisie dans le groupe constitué des cordes imprégnées de matrice, des retors imprégnés de matrice, des fils imprégnés de matrice, des stratifils imprégnés de matrice, des non-tissés imprégnés de matrice, des tissus imprégnés de matrice, des tissus maillés imprégnés de matrice, des tricots imprégnés de matrice, des feutres imprégnés de matrice, et de tout mélange de deux des structures fibreuses susmentionnées ou plus, la matrice étant composée d'un matériau choisi dans le groupe constitué des résines phénoliques carbonisées et/ou graphitisées, des résines époxy, des novolaques, des résines de cyanates, des résines de benzoxazine, des polyesters, des vinylesters, des résines bismaléimides, des bisoxazolines et de tout mélange de deux des matériaux susmentionnés ou plus.

7. Écran thermique (10) selon au moins l'une des revendications précédentes,
**caractérisé en ce que**
les fibres de la structure fibreuse (14) sont des fibres de carbone et/ou des fibres de céramique, de préférence des fibres de carbure de silicium.

8. Écran thermique (10) selon au moins l'une des revendications précédentes,
**caractérisé en ce que**
la structure fibreuse (14) comprend une ou au moins deux couches, l'épaisseur de la structure fibreuse (14) étant de préférence comprise entre 0,05 et 5 mm, de manière particulièrement préférée entre 0,1 et 3 mm et de manière tout particulièrement préférée entre 0,2 et 1 mm.

9. Écran thermique (10) selon au moins l'une des revendications précédentes,
**caractérisé en ce que**
le rapport entre la conductivité thermique de l'au moins une feuille de graphite (12) dans le plan de la feuille et la conductivité thermique de l'au moins une feuille de graphite (12) perpendiculaire au plan de la feuille est supérieur à 5:1, de préférence supérieur à 20:1 et de manière particulièrement préférée supérieur à 30:1.

10. Écran thermique (10) selon au moins l'une des revendications précédentes,
**caractérisé en ce que**
celui-ci comporte 1 à 40 et de préférence 5 à 20 couches superposées d'une feuille de graphite (12) et/ou 5 à 40 et de préférence 8 à 20 couches de feuilles de graphite (12) différentes.

11. Écran thermique (10) selon la revendication 3,
**caractérisé en ce que**
la structure fibreuse contenue dans l'au moins une couche en matériau composite fibreux (20) est choisie dans le groupe constitué des stratifils, des non-tissés, les tissus, des tissus maillés, des tricots, des feutres et de tout mélange de deux des structures fibreuses susmentionnées ou plus.

12. Écran thermique (10) selon la revendication 3 ou 11,
**caractérisé en ce que**
la matrice de l'au moins une couche en matériau composite fibreux (20) est composée d'un matériau choisi dans le groupe constitué des résines phénoliques carbonisées et/ou graphitisées, des résines époxy, des novolaques, des résines ester de cyanate, des résines de benzoxazine, des polyesters, des esters vinyliques, des résines bismaléimides, des bisoxazolines et de tout mélange de deux des matériaux susmentionnés ou plus.

13. Écran thermique (10) selon au moins l'une des revendications 3, 11 ou 12,
**caractérisé en ce que**
les fibres de l'au moins une couche en matériau composite fibreux (20) sont des fibres de carbone et/ou des fibres de céramique, de préférence des fibres de carbure de silicium.

14. Écran thermique (10) selon au moins l'une des revendications précédentes,
**caractérisé en ce que**
celui-ci présente une teneur en cendres déterminée selon DIN EN 11885 ICP-OES de 5 % au maximum, de préférence de 2 % au maximum, de manière particulièrement préférée de 0,15 % au maximum, de manière tout particulièrement préférée de 100 ppm au maximum et de manière préférée entre toutes de maximum 5 ppm.

15. Utilisation d'un écran thermique (10) selon au moins l'une des revendications précédentes dans un four à haute température ou dans un convertisseur de gaz.
